# EUROPÄISCHE PATENTANMELDUNG

(11) **EP 1 443 254 A1**
(43) Veröffentlichungstag der Anmeldung: **04.08.2004**
(21) Anmeldenummer: 04001232.0
(22) Anmeldetag: 21.01.2004
(51) Int. Cl.: F16L 21/035, F16L 37/084

(54) **Wasserführung-Stecksystem**

(30) Priorität: 29.01.2003 DE 10303468
(71) Anmelder: BSH Bosch und Siemens Hausgeräte GmbH, 81739 München (DE)
(72) Erfinder: Bolduan, Edwin, 13629 Berlin (DE); Wiemer, Horst, 14532 Kleinmachnow (DE)

(57) **Zusammenfassung**

Derartige Verbindungen sind regelmäßig mit nur einer Schubbewegung miteinander zu fügen. Mit dem Fügen ist die Dichtheit der gefügten Teile und ihre gegenseitigen Verriegelung herstellbar.

Um die Dichtung solcher Verbindungen zu verbessern und ihre Montage zu erleichtern, weist die erfinderische Steckverbindung einen Stecker 1 mit zwei- oder mehrfach abgestuftem Außenquerschnitt 3 auf und eine den Stecker 1 aufnehmende Buchse, deren Innenquerschnitt axial in Richtung zur Öffnung komplementär zum Stecker zwei- bzw. mehrstufig erweitert ist. Nach Maßgabe der Erfindung ist je Stufe mindestens ein Dichtelement vorgesehen. In bevorzugter Weise sind die Abstände der Dichtelemente so gewählt, dass diese zeitlich nacheinander in Eingriff bringbar sind.

## Beschreibung

Die vorliegende Erfindung betrifft eine Steckverbindung, wie sie insbesondere für den Wasseranschluss und die Wasserführung bei Waschmaschinen, Trocknern oder Geschirrspülmaschinen eingesetzt werden.

Üblicherweise werden bei wasserführenden Haushaltgeräten zum Anschluss des Gerätes an das externe Wassernetz sowie bei der geräteinternen Wasserführung und bei der Abführung des Schmutzwassers bzw. der Lauge in das Abwassernetz elastische Schläuche aus Kunststoff oder Gummi eingesetzt. Dabei ist es notwendig, dass die Verbindungen der Rohr- bzw. Schlauchenden mit den Baugruppen bzw. Komponenten der Haushaltgeräte betriebssicher sind, d.h. sie müssen allen auftretenden mechanischen Belastungen, insbesondere den beim Waschen und Schleudern vom Antrieb der Trommel übertragenen Schwingungen, standhalten und auf Dauer dicht sein.

Gegenüber anderen bekannten Verbindungsarten haben Steckrastverbindungen den Vorteil, dass die Dichtelemente und die Elemente zur mechanischen Absicherung der Verbindung in den zu verbindenden Teilen integriert sind, so dass weitere Einzelteile nicht benötigt werden. Die Herstellung der Verbindung wird auch wesentlich dadurch vereinfacht, dass das Fügen der Einzelteile, das Abdichten der gefügten Teile und Sichern der Steckrastverbindung mit einer einzigen Schubbewegung ohne Werkzeug und nur mit einer Hand ausführbar sind. Diese Vorteile wirken sich wesentlich bei der Gerätemontage in der Endfertigung aus, insbesondere durch eine Verkürzung der Durchlaufzeit.

Eine Steckrastverbindung für flüssige oder gasförmige Medien ist aus der DE 33 22 202 A1 bekannt. Gemäß der darin offenbarten Lösung wird eine steckbare, dichte und kraftschlüssige Verbindung dadurch erreicht, dass das zu verbindende Rohr in ein mit Dicht- und Sicherungselementen ausgestattetes Anschlussteil gedrückt wird. Die der mechanischen Sicherung der Verbindung dienenden Federelemente sind keilförmig ausgebildet, sie werden beim Einschub des Rohres durch Schrägstellen geweitet und verkeilen sich bei axialer Zugbelastung im eingeschobenen Rohrende.

Da bei elastischem Material die Sicherung der Verbindung durch die Federelemente nicht gewährleistet werden kann, ist der Einsatz des Rohrstecksystems gemäß der DE 33 22 202 A1 eingeschränkt auf Rohre bzw. Schläuche mit harter Außenoberfläche. Nachteilig ist weiterhin, dass ein Lösen der Verbindung sehr aufwendig und ohne ein Spezialwerkzeug oder ein Zusatzelement nicht ausführbar ist.

In der DE 100 31 166 A1 wird eine in Haushaltgeräten universell einsetzbare Steckrastverbindung für Wellrohrschläuche beschrieben, die einen einfachen Verriegelungsmechanismus aufweist, der ohne Werkzeug oder Zusatzelement wieder gelöst werden kann.

Die in der DE 100 31 166 A1 offenbarte Steckrastverbindung besteht aus einem Ansatzstück für den Anschluss an einen Wellrohrschlauch und einer an die einzelnen Komponenten der Wasserführung anschließbare Buchse, die beide durch Ineinanderstecken miteinander verbindbar sind. Das hohlzylindrische Ansatzstück ist einseitig mit einem Wellrohrschlauch fest verbunden oder einstückig angeformt. An seiner Außenseite weist das Ansatzstück radial umlaufende Rippen auf. In Richtung des Endes des Ansatzstückes sind Nuten vorgesehen, die zur Aufnahme von O-Ring-Dichtungen dienen, die die Steckrastverbindung abdichten. Die hohlzylinderförmige Buchse weist lamellenartige Halteelemente auf, die in regelmäßigen Abständen radial im Innern der Buchse angeordnet sind. An den unteren Enden der lamellenartigen Halteelemente ragt jeweils ein Vorsprung nach innen.

Zur Herstellung der Steckrastverbindung wird das am oberen Ende des Wellrohrschlauches angeformte hohlzylinderförmige Ansatzstück in die Buchse eines Anschlussstückes geschoben. Die Vorsprünge am Ende der Buchse werden beim Fügen des Ansatzstückes auseinander gedrückt, um die Montage zu erleichtern. In der Füge-Endposition bewirken die Vorsprünge eine Verriegelung mit den Rippen des Ansatzstücks. Dadurch wird eine kraftschlüssige Verbindung geschaffen. Zur Entriegelung können die Vorsprünge mit geringem Kraftaufwand radial nach außen bewegt werden, womit die Steckrastverbindung leicht zu lösen ist.

Der Erfindung liegt die Aufgabe zugrunde, die aus dem Stand der Technik bekannten Steckverbindungen dahingehend zu verbessern, dass die Sicherheit der Dichtungen erhöht wird und die Montage der Steckverbindung erleichtert wird durch sicheres Führen und Positionieren der zu fügenden Teile, sowie dadurch, dass die zum Fügen der Teile aufzubringenden Kräfte reduziert werden.

Es ist auch Aufgabe der Erfindung, den konstruktiven Spielraum und damit die Anpassungsmöglichkeiten der erfindungsgemäßen Steckverbindung an unterschiedliche Einsatzfälle zu erweitern, ohne dadurch den technischen und/oder den ökonomischen Aufwand signifikant zu erhöhen.

Die Aufgabe wird erfindungsgemäß durch die im Anspruch 1 angegebenen Merkmale gelöst. Vorteilhafte Ausgestaltungen und Weiterbildungen der Erfindung ergeben sich aus den nachfolgenden Unteransprüchen.

Die erfindungsgemäße Steckverbindung besteht aus einem Stecker, dessen Außenquerschnitt axial und in Richtung zu seinem freien Ende zwei- oder mehrfach abgestuft ist und einer den Stecker aufnehmenden Buchse, deren Innenquerschnitt axial in Richtung zur Öffnung komplementär zum Stecker zwei- bzw. mehrstufig erweitert ist. Nach Maßgabe der Erfindung ist je Stufe mindestens ein Dichtelement vorgesehen, wodurch eine verbesserte Dichtung der Steckverbindung erzielbar ist.

Durch einfache konstruktive Maßnahmen kann die Erfindung dahin gehend ausgestaltet werden, dass die Dichtelemente beim Fügevorgang zeitlich nacheinander mit der entsprechenden Fläche dichtend in Eingriff gebracht werden. Dabei ist die Reihenfolge beliebig, sie kann in Abhängigkeit von den spezifischen Einsatzbedingungen frei gewählt werden. Durch das zeitlich versetzte Einbringen der Dichtungen sind Stecker und Buchse mit geringem Kraftaufwand leicht zu fügen. Ein weiterer Vorteil ergibt sich daraus, dass während des Fügevorgangs die Dichtungen als Positionierhilfen wirken, wodurch der Fügevorgang einfacher und sicherer wird.

In einer bevorzugten Ausgestaltung der Erfindung weist der Stecker einen wellenförmigen Anschlag auf. Der in Füge-Endposition anliegende Rand der Buchse ist dazu komplementär ebenfalls wellenförmig ausgebildet. Durch diese Maßnahme lässt sich eine innen liegende Rastverbindung durch gegensinniges Drehen der gefügten Teile relativ leicht entriegeln.

Weitere Vorteile und konstruktive Einzelheiten der Erfindung ergeben sich aus den Ausführungsbeispielen, die nachfolgend unter Bezugnahme auf die Zeichnungen beschrieben wird. Die Zeichnungen bilden die Ausführungsformen der erfindungsgemäßen Steckverbindung in Schnittansicht ab. Im Einzelnen zeigen
- Fig. 1: Stecker und Buchse der Steckverbindung,
- Fig. 2 und 3: Steckverbindung teilgefügt ,
- Fig. 4: die Steckverbindung gemäß Fig. 3 gefügt,
- Fig. 5: eine andere Alternative einer erfindungsgemäßen Steckverbindung mit einem Eingriffdurchmesser für die Rastvorrichtung größer als die Dichtungsdurchmesser in einer Position vor der Verbindung und
- Fig. 6: die Steckverbindung gemäß Fig. 5 in durch einen gewellten Anschlag definierter Verbindungsposition.

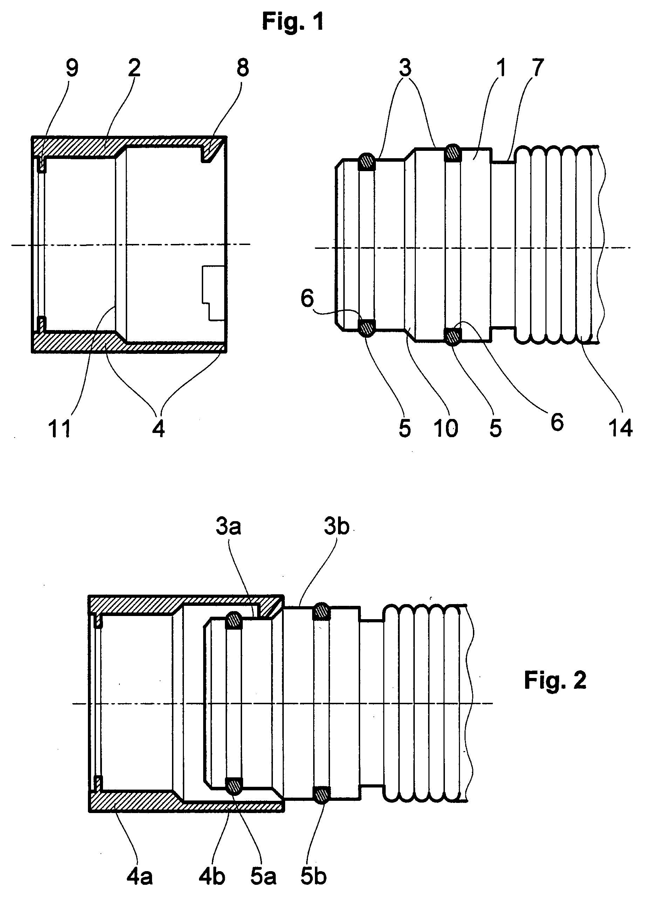

In Fig. 1 sind der Stecker 1 und die den Stecker 1 aufnehmende Buchse 2 getrennt als Einzelteile dargestellt. Mindestens eines der beiden Teile 1 oder 2 ist aus relativ elastischem Material gefertigt, vorteilhafterweise ist die gesamte Steckverbindung aus Kunststoff gebildet. Damit verbinden sich die Vorteile einer gewissen Elastizität und einer hohen Lebensdauer. In der bevorzugten Ausführungsform ist der Stecker 1 einstückig an den Wellrohrschlauch 14 angeformt, wodurch eine langlebige dichte Verbindung von Wellrohrschlauch und Ansatzstück erreicht wird. Gleichzeitig wird dadurch die Anzahl der miteinander zu verbindenden Einzelteile verringert.

Der Außenquerschnitt des Steckers 1 ist axial und in Richtung zu seinem freien Ende in zwei Stufen 3 abgestuft. Dazu komplementär ist der Innenquerschnitt der Buchse 2 axial in zwei Stufen 4 erweitert. Im Außenmantel des Steckers 1 ist in jeder Stufe 3 umlaufend eine Nut 6 mit rechteckigem Querschnitt eingearbeitet, in die die Dichtringe 5 nahezu spielfrei eingelegt sind.

Zur Verriegelung der Steckverbindung sind im Stecker 1 nahe dem angeformten Wellrohrschlauch 14 eine Rastnut 7 und am Rand der Buchse 2 Rastnasen 8 vorhanden, die in der Füge-Endposition ineinander greifen und Stecker 1 und Buchse 2 miteinander verriegeln. Durch die beim Fügen ausgeübte Schubkraft werden, unterstützt durch die nach innen gerichtete Abschrägung der Kanten, die elastischen Rasthaken 8 nach außen gedrückt und geben die Öffnung der Buchse 2 frei. Beim Lösen der Steckverbindung sind nur geringe Kräfte erforderlich, um die Rastung zu entriegeln. Zur Begrenzung der Einschubtiefe beim Fügen von Buchse 2 und Stecker 1 ist im Innern die Buchse 2 ein Anschlag 9 vorhanden.

Eine weitere mögliche Rastverbindung sieht vor, dass statt der Rasthaken 8 im Innern der Buchse 2 eine umlaufende Rastrippe anzuformen. Bei dieser Ausführung ist die Buchse 2 axial mehrfach geschlitzt, um ein problemloses Aufbiegen der Rastrippe beim Fügen und bei einem eventuell notwendigen Lösen der Verbindung zu ermöglichen

In Fig. 2 ist eine Fügeposition abgebildet, bei der der Stecker so weit in die Buchse eingeschoben ist, dass der erste abgestufte Teil 3a des Steckers 1 in den erweiterten Bereich 4b der Buchse 2 hineinragt. In dieser Position liegt der Dichtring 5 noch nicht oder nur lose und damit nicht dichtend an der Innenfläche der Buchse 2 an. In der ersten Phase des Einschubvorganges, bei der sich der erste Dichtring 5a im erweiterten Bereich 4b der Buchse 2 bewegt, hat der Dichtring 5a die Funktion einer Positionierhilfe.

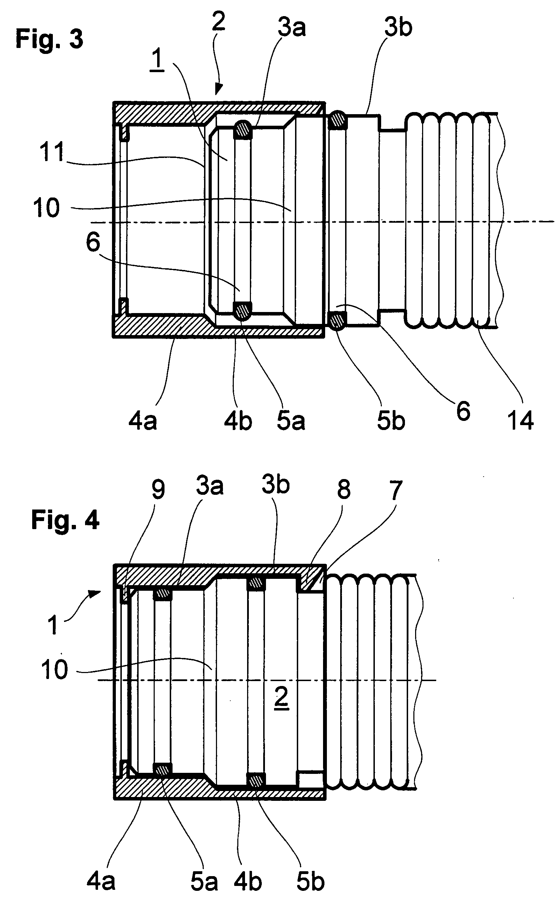

Wie aus den Darstellungen in Fig. 2 und 3 ersichtlich, werden die beiden Dichtringe 5a und 5b beim Fügevorgang nacheinander mit der entsprechenden Buchsen-Innenwand in Eingriff gebracht. Dadurch wird der Fügevorgang einfacher und ist mit geringerem Kraftaufwand auszuführen. Es kann vorteilhaft sein, die Reihenfolge anders zu wählen und zuerst die Quetschdichtung des Dichtrings 5a mit dem verengten Innenbereich 4a der Buchse 2 herzustellen und dann den Dichtring 5b in den erweiterten Abschnitt 4b der Buchse 2 einzupressen. Im dargestellten Ausführungsbeispiel kann die Reihenfolge der zu realisierenden Quetschdichtungen in konstruktiv einfacher Weise dadurch umgekehrt werden, dass die Ringnut 6 für den Dichtring 5a dichter zum freien Ende des Steckers 1 eingebracht wird und der Abstand der zweiten Ringnut 6 zum angeformten Wellrohrschlauch 14 verkleinert wird.

In Fig. 3 ist der Stecker 1 so weit eingeschoben, dass das angefaste freie Ende des Steckers 1 und die Fase der Stufekante 11 in der Buchse 2 unmittelbar im Eingriff sind und damit Stecker 1 und Buchse 2 eng toleriert positioniert sind. Beim Fortsetzen des Fügevorgangs wird das abgestufte Steckerende 3a weitestgehend selbstpositionierend in den verengten Bereich 4a der Buchse 2 eingeschoben und eine erste Quetschdichtung durch das Eindrücken des Dichtringes 5b in den erweiterten Bereich 4b der Buchse 2 hergestellt.

In Fig. 4 ist die Steckverbindung hergestellt, die gefügten Teile 1 und 2 sind in der Endposition. Die maximale Einschubtiefe des Steckers 1 in der Buchse 2 ist begrenzt durch einen Anschlag 9 in der Buchse 2 und/oder durch die aneinander stoßenden Kanten der Abstufungen 3 und 4 des Steckers 1 bzw. der Buchse 2. In der Zeichnung sind aus Darstellungsgründen beide Möglichkeiten realisiert. Dieser zweifache Anschlag ist für die praktische Ausführung nicht erforderlich. Bei genau dimensionierten und in der Form aufeinander abgestimmten komplementär gestalteten Abstufungen 10, 11 von Stecker 1 und Buchse 2 ist ein gesonderter Anschlag 9 nicht erforderlich. Andererseits bietet ein gesonderter Anschlag Freiräume bei der Dimensionierung der Abstufungen 3 und 4.

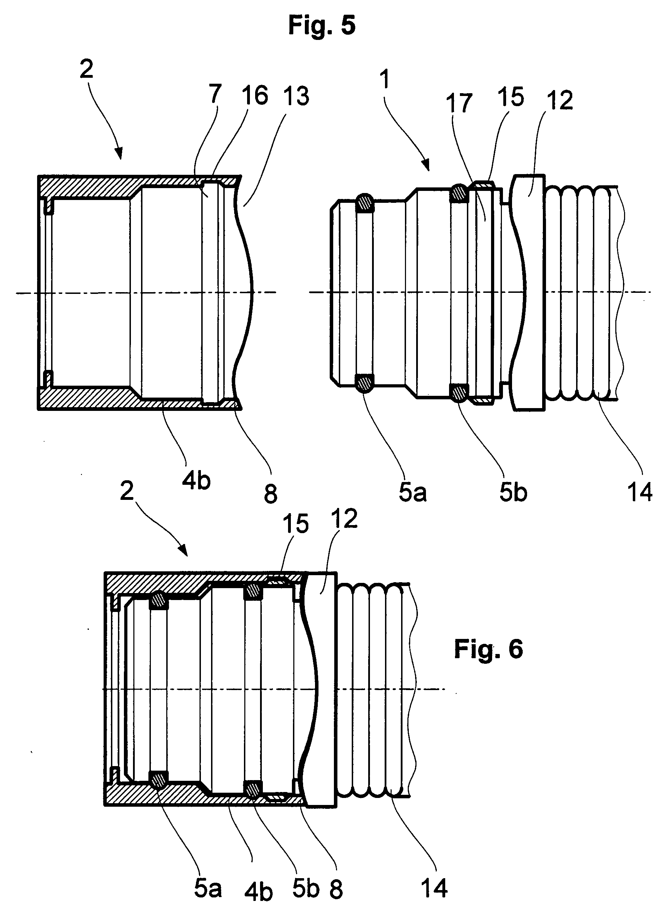

Bei einer Steckverbindung gemäß Fig. 5 und 6 ist für die Rastverbindung zwischen Stecker und Buchse eine weitere, höhere Stufe vorgesehen. Dabei hat diese Stufe einen Durchmesser, der so groß ist, dass die Dichtungen 5a und 5b ohne Berührung der Rastnase 8 bzw. eines Rastnasenringes an der Rastvorrichtung vorbeistreichen. Erst wenn der Dichtring 5b die Ringfläche 4b an der zugeordneten Dichtungsstufe erreicht hat, kann der Rastring 17 an der Rastnase 8 die Rastung aufspreizen und dann dahinter in die rückspringende Rastnut 16 einfallen. Dadurch wird die Dichtung geschont; denn sie wird keiner abreibenden Berührung mit der Rastnase 8 bzw. dem Rastnasenring unterzogen.

In der bevorzugten Ausführungsform gemäß Fig. 5 und 6 der erfindungsgemäßen Steckverbindung weist der Stecker 1 an seinem mit dem Wellrohrschlauch 14 verbundenen Ende einen radial umlaufenden Anschlag 12 auf, der die Einschubtiefe von Stecker 1 und Buchse 2 dadurch begrenzt, dass in der Endposition (Fig. 6) der äußere Rand 13 der Buchse 2 am Anschlag 12 anliegt. Die Sicherung der Steckverbindung erfolgt über eine innenliegende Rastung, wobei eine Rastrippe 15 (außen teilweise geschnitten dargestellt) auf dem Außenmantel des Steckers 1 in eine in die Innenwand der Buchse 2 eingeformte Nut 7 kraft- und formschlüssig eingreift. Im Beispiel der Fig. 5 ist die Nut 7 nahe der Buchsenöffnung und die Rastrippe 15 des Steckers 1 hinter den Dichtringen 5 angeordnet. Um die Verbindung leicht herzustellen und im Bedarfsfalle leicht lösen zu können, ist die Buchse in Höhe des Rastringes 8 in hier nicht näher dargestellter Weise axial mehrfach geschlitzt. Dem gleichen Ziel dienen die nach außen abgeschrägten Kanten der Rastrippe 15. Dabei sind die zur Buchse weisende Kante flach und die davon wegweisende, die Verriegelung bewirkende Kante steiler ausgelegt.

Die Rastung kann in einer weiteren, nicht dargestellten Variante der bevorzugten Ausführungsform dahingehend modifiziert werden, dass die Rastrippe 15 nahe dem freien Ende des Steckers 1 - vor den Dichtungen 5 - angeformt ist und die Rastnut 7 dazu komplementär im verengten Bereich der Buchse 2 eingearbeitet ist. In dieser Ausführungsvariante ist das Ende des Steckers 1 mehrfach axial geschlitzt, wodurch die so geteilten Enden des Steckers 1 nach innen abgebogen werden können.

Die in der Endposition der Steckverbindung gegeneinander drückenden Ränder 13 der Buchse 2 und des Anschlags 12 des Steckers 1 sind wellenförmig ausgebildet. Auch die Wellung ist zur Verbesserung der Anschaulichkeit überdimensioniert dargestellt. Die fest gefügte Verbindung von Stecker 1 und Buchse 2 ist dadurch leicht zu lösen, dass mit einer Drehbewegung der gefügten Teile 1 und 2 gegeneinander die Rastung gelöst wird, wobei die Wellung von Buchsenrand 13 und Anschlag 12 wie eine schiefe Ebene kraftunterstützend wirkt. Die axiale Höhendifferenz zwischen Wellental und -berg muss nur geringfügig größer sein als die Tiefe der steilen Kante der Rastrippe 15. Somit wird vorteilhafterweise eine Steckverbindung geschaffen, die leicht zu fügen und leicht wieder zu lösen ist.

## Patentansprüche

1. Steckverbindung bestehend aus einem Stecker und einer den Stecker aufnehmenden Buchse sowie mindestens einem Dichtelement, das beim Fügen von Stecker und Buchse durch Ineinanderstecken beider Teile diese gegeneinander abdichtet, **dadurch gekennzeichnet, dass** der Außenquerschnitt des Steckers (1) axial und in Richtung zu seinem freien Ende zwei- oder mehrfach abgestuft ist und dazu komplementär der Innenquerschnitt der Buchse (2) axial in Richtung zur Öffnung zwei- bzw. mehrstufig erweitert ist, und dass die Steckverbindung je Stufe (3, 4) mindestens ein Dichtelement (5) aufweist.

2. Steckverbindung nach Anspruch 1, **dadurch gekennzeichnet, dass** die je Stufe vorhandenen Dichtelemente (5) so angeordnet sind, dass beim Ineinanderstecken von Stecker (1) und Buchse (2) die Dichtelemente (5) zeitlich nacheinander mit dem abzudichtenden Stufenabschnitt (3, 4) in Eingriff bringbar sind.

3. Steckverbindung nach Anspruch 1 oder 2, **dadurch gekennzeichnet, dass** zur Aufnahme der Dichtelemente (5) in der Wandung der Buchse (2) oder bevorzugt im Mantel des Steckers (1) umlaufend Nuten, bevorzugt mit rechteckigem Querschnitt, vorgesehen sind, in die die Dichtelemente (5) nahezu spielfrei eingelegt sind.

4. Steckverbindung nach einem der Ansprüche 1 bis 3, **dadurch gekennzeichnet, dass** die Buchse (2) im Innern und/der Stecker (1) außen Anschläge (9 bzw. 12) aufweisen, durch die die Füge-Endposition der ineinandergesteckten Teile (1 bzw. 2) des Verbindungselementes bestimmt ist.

5. Steckverbindung nach einem der Ansprüche 1 bis 4, **dadurch gekennzeichnet, dass** der Stecker (1) und/oder die Buchse (2) aus formelastischem Material gefertigt sind und dass der Stecker (1) oder die Buchse (2) Rastnasen (8) oder eine Rastrippe (15) aufweisen, die in der Füge-Endposition in eine Nut (7) im jeweils anderen Teil (2 oder 1) eingreifen.

6. Steckverbindung nach Anspruch 1, **dadurch gekennzeichnet, dass** der Stecker (1) und/oder die Buchse (2) als Anschlussstück für Schläuche und wasserführende bzw. wasseraufnehmende Bauteile oder Baugruppen ausgebildet sind und mit diesen fest, vorzugsweise einstückig, verbunden sind.

7. Steckverbindung nach Anspruch 1, **dadurch gekennzeichnet, dass** das Steckerende und die Stufenübergänge (10, 11) am Stecker (1) und in der Buchse (2) angefast sind.

8. Steckverbindung nach Anspruch 1 und 4, **dadurch gekennzeichnet, dass** der Stecker (1) und die Buchse (2) als Hohlzylinder ausgebildet sind und der Anschlag (12 oder 9) am Stecker (1) oder in der Buchse (2) und die in der Füge-Endposition am Anschlag (12 oder 9) anliegende Fläche des jeweils anderen Teils (1 oder 2) komplementär zueinander und in axialer Richtung wellenförmig ausgebildet sind.

9. Steckverbindung nach einem der Ansprüche 5 bis 8, **dadurch gekennzeichnet, dass** die Rastnasen (8) oder Rastrippen (15, 17) am Stecker (1) bzw. an der Buchse (2) und ihr jeweils zugeordnetes Rastelement (Nut 7 oder Rille 16) am Gegenstück in einer weiteren Stufe oberhalb der Dichtelemente (5) vorgesehen ist, die einen größeren Eingriffdurchmesser aufweist als die den Dichtelementen (5) zugeordneten Stufen.
